# EUROPÄISCHE PATENTSCHRIFT

(11) **EP 0 774 220 B1**
(45) Veröffentlichungstag und Bekanntmachung des Hinweises auf die Patenterteilung: **28.11.2001**
(21) Anmeldenummer: 96114593.5
(22) Anmeldetag: 12.09.1996
(51) Int. Cl.: A46B 13/02

(54) **Wasch- oder Polierwalze für Fahrzeugwaschanlagen**
Cylinder brush for automatic car washing systems
Brosse à rouleau pour installations de lavage de voiture automatisé

(30) Priorität: 15.11.1995 DE 19542544
(43) Veröffentlichungstag der Anmeldung: 21.05.1997
(73) Patentinhaber: WashTec Holding GmbH, 86153 Augsburg (DE)
(72) Erfinder: Weigele, Gebhard, 86356 Neusäss (DE)
(74) Vertreter: Rapp, Bertram, Dr.

(56) Entgegenhaltungen:
- DE-U- 9 301 629
- DE-U- 9 301 695
- US-A- 4 324 017
- US-A- 4 377 878

## Beschreibung

Die Erfindung betrifft eine Wasch- oder Polierwalze für Fahrzeugwaschanlagen, mit einem rotierend antreibbaren Walzenkern, der mit einer Kombination von streifenförmigen Arbeitselementen aus weichem textil- oder fellartigem Material und aus gegebenenfalls steiferen, biegsamen Stützelementen versehen ist, wobei jeweils mehrere Arbeitselemente an einem Arbeitselementträger und mehrere Stützelemente an einem drehfest mit dem Walzenkern verbundenen Stützelementträger angeordnet sind und wobei bei frei rotierendender Walze der Arbeitsdurchmesser der Arbeitselemente größer ist als der Wirkdurchmesser der Stützelemente, so daß im wesentlichen nur die Arbeitselemente in Kontakt mit der Fahrzeugoberfläche kommen.

Derartige Wasch- oder Polierwalzen sind aus DE 93 01 695 U1 bzw. US-A-4377878 bekannt. Bei diesen bekannten Wasch- oder Polierwalzen bestehen die Arbeitselemente aus textilem Material, wie z.B. Filz oder Gewebe. Es handelt sich hierbei meist um Lappen, deren radial innere Enden an einem schalenförmigen Träger festgelegt sind, der den Walzenkern konzentrisch umgibt und fest mit diesem verbunden ist. Die äußeren Ende der Lappen weisen radial zur Walzenachse verlaufende Schlitze auf. Die Arbeitselemente können auch aus Fell oder fellartigem Material bestehen. In Umfangsrichtung der Walze sind zwischen den Arbeitselementen jeweils Stützelemente aus biegsamen Material vorgesehen. Diese Stützelemente weisen in radialer Richtung eine kürzere Länge auf als die Arbeitselemente. Als Stützelemente können Borsten, die vorzugsweise aus Kunststoff bestehen, oder auch Kunststoffleisten, die an ihrem radial äußeren Rand geschlitzt sind, vorgesehen sein. Die radial inneren Enden der Stützelemente sind an dem gleichen Träger festgelegt, der auch die Arbeitselemente trägt. Durch die radial unterschiedlichen Längen der Arbeitselemente und der Stützelemente wird erreicht, daß im wesentlichen nur die Arbeitselemente in Kontakt mit der Fahrzeugoberfläche kommen. Die Stützelemente haben die Aufgabe, die weicheren Arbeitselemente abzustützen, damit die Walze, insbesondere wenn sie um eine horizontale Achse rotiert, nicht in sich zusammenfällt. Insbesondere sollen sie aber der Walze eine gewisse Elastizität verleihen. Kommt die rotierende Walze mit der Fahrzeugoberfläche in Kontakt, dann legen sich die Arbeitselemente teilweise auf die Stützelemente und werden von diesen in einiger Entfernung von dem Walzenkern elastisch abgestützt. Durch die Stützelemente wird erreicht, daß die Wirkstromaufnahme des Antriebsmotors der Walze oder das Drehmoment bereits ansteigen, bevor sich die Fahrzeugoberfläche dem Walzenkern genähert hat. Durch die Veränderung der Wirkstromaufnahme bzw. des Drehmomentes werden Steuerimpulse erzeugt, die die Walze mittels geeigneter Steuerelemente etwas von der Fahrzeugoberfläche entfernen, so daß immer in etwa die gleiche Eintauchtiefe der Fahrzeugoberfläche in die Walze sichergestellt ist. Bei entsprechendem Gewichtsausgleich kann gegebenenfalls auch auf eine Steuerung verzichtet werden.

Bei einer etwas abweichenden Konstruktion einer bekannten Waschwalze sind die Borsten als Stützelemente und die Textilstreifen als Arbeitselemente in Achsrichtung der Walze entweder in räumlich getrennten Bereichen oder in Mischbestückung abwechselnd nebeneinander an der Walze angeordnet. So soll eine um eine vertikale Achse rotierende Walze, die zum Waschen der Seitenflächen eines Fahrzeuges dient, zumindest in ihrem unteren Bereich Borsten und in ihrem oberen Bereich Textilstreifen aufweisen. Hierbei sind die Textilstreifen als Arbeitselemente an eigenen Arbeitselementträgern und die Borsten als Stützelemente an eigenen Stützelementträgern angeordnet. Sowohl die Arbeitselementträger als auch die Stützelementträger sind dabei fest mit dem Walzenkern verbunden.

Die vorgenannten Konstruktionen haben den wesentlichen Nachteil, daß sich die lappenartigen Arbeitselemente, gleichgültig ob sie aus Textil oder aus Fell bestehen, leichter an vorstehenden Fahrzeugteilen, wie Spiegeln, Scheibenwischer, Antennen und dgl. verfangen können, als die Borsten üblicher Wasch- oder Polierbürsten. Wenn sich ein Arbeitselement verfängt, können die betreffenden vorstehenden Fahrzeugteile beschädigt oder auch ganz vom Fahrzeug abgerissen werden.

Um dies zu verhindern, wurde auch schon vorgeschlagen, bei einer Waschbürste, die ausschließlich Arbeitselemente in Form von geschlitzten Textilstreifen aufweist, auf dem Walzenkern mehrere drehbare Naben von etwa einem halben Meter Länge auf dem Walzenkern anzuordnen, die dann mit entsprechend langen Arbeitselementträgern verbunden sind. Zwischen jeder Nabe und dem Walzenkern ist eine Rutschkupplung vorgesehen, so daß die betreffende Nabe stehen bleibt, wenn sich eines der Arbeitselemente an einem Rückspiegel, Scheibenwischer oder sonstigem vorstehenden Fahrzeugteil verfangen hat. Die drehbaren Naben mit den Rutschkupplungen stellen jedoch eine sehr aufwendige Konstruktion dar und außerdem weist diese bekannte Waschwalze nicht den gewünschten Polstereffekt auf. Hinzu kommt, daß bei Stillstand der Nabe eine größere Fläche des Fahrzeugs nicht gereinigt wird. Diesen Nachteil könnte man zwar prinzipiell beseitigen, indem man die einzelnen Naben in Achsrichtung kürzer macht, jedoch erhöht sich dann die Anzahl der erforderlichen Rutschkupplungen und die Walze wird insgesamt teurer.

Der Erfindung liegt daher die Aufgabe zugrunde, eine Wasch- oder Polierwalze für Fahrzeugwaschanlagen der eingangs erwähnten Art zu schaffen, bei denen eine Beschädigung von Fahrzeugteilen durch hängenbleibende Arbeitselemente vermieden wird und die dabei kostengünstig herstellbar sind.

Dies wird nach der Erfindung dadurch erreicht, daß mehrere Arbeitselementträger in Achsrichtung der Walze in solchem gegenseitigen Abstand nebeneinander vorgesehen sind, daß die Arbeitsbereiche ihrer Arbeitselemente zumindest aneinander angrenzen, daß die Arbeitselementträger relativ zum Walzenkern drehbar sind, daß die Stützelemente zwischen benachbarte Arbeitselementträger hineinreichen und daß die Drehmitnahme der Arbeitselemente mittels Reibung durch die an ihnen und/oder den Arbeitselementträgern anliegende Stützelemente erfolgt.

Die Erfindung geht also von dem Gedanken aus, die Arbeitselementträger gegenüber dem Walzenkern drehbar anzuordnen und dabei die drehfest mit dem Walzenkern verbundenen Stützelemente auch als eine Art Rutschkupplung zu verwenden. Durch Reibung zwischen den Stützelementen und den Arbeitselementträgern bzw. den Arbeitselementen selbst wird ein begrenztes Drehmoment übertragen, welches die Arbeitselemente normalerweise mit gleicher Drehzahl rotieren läßt wie die übrige Walze. Da das durch Reibung übertragbare Drehmoment nur von den Andruckkräften und dem Reibungskoeffizienten (Reibungszahl oder Reibungsbeiwert), der hauptsächlich vom Material und der Oberflächenbeschaffenheit der zusammenwirkenden Oberflächen und der Menge und Verteilung der zwischen den Oberflächen vorhandenen Flüssigkeit bestimmt wird, abhängt, ist das maximal übertragbare Drehmoment unabhängig von der jeweiligen Drehzahl der Walze. Dies bedeutet, daß die Drehmitnahme der Arbeitselemente unabhängig von der Drehzahl der Walze immer unterbleibt, sobald ein vorbestimmtes Drehmoment überschritten wird. Dieses Drehmoment kann durch Versuche so ermittelt werden, daß beim Hängenbleiben der Arbeitselemente an vorstehenden Fahrzeugteilen das zugehörige Arbeitselement durch das hängengebliebene Arbeitselement angehalten wird, während die übrigen Arbeitselementträger mit ihren zugehörigen Arbeitselementen weiter rotieren. Hierdurch wird eine Beschädigung von Fahrzeugteilen bzw. auch der Arbeitselemente weitgehend vermieden. Diese Sicherheitsfunktion wird praktisch ohne wesentliche zusätzliche Bauteile erreicht. Insbesondere können teure Rutschkupplungen entfallen, da die Stützelemente deren Funktion übernehmen. Zusätzlich erfüllen diese Stützelemente weiterhin ihre bisherige Aufgabe, die Arbeitselemente elastisch abzustützen und den gewünschten Polstereffekt in der Wasch- oder Polierwalze zu erzeugen.

Eine vorteilhafte Ausgestaltung der Walze besteht darin, daß die Arbeitselementträger als Scheiben aus flexiblem Material ausgebildet sind. Derartige Scheiben können, wie die Praxis gezeigt hat, verhältnismäßig dünn mit einer Dicke von nur wenigen Millimetern ausgebildet sein. Man kann diese Scheiben mit einer zentralen, kreisrunden Ausnehmung versehen und direkt auf dem Walzenkern zwischen zwei mit entsprechendem axialen Abstand angeordneten Stützelementträgern anordnen. Es ist auch möglich, die Scheibe mit ihrer kreisrunden Ausnehmung auf dem Stützelementträger zwischen zwei radial umlaufenden Borstenreihen oder Stützelementreihen zu lagern. Die Borsten stützen hierbei auch die flexible Scheibe ab.

Außerdem übertragen sie das Drehmoment durch Reibung an den beiden Stirnflächen der Scheibe auf diese. Derartige Scheiben lassen sich z.B. aus Filz relativ billig herstellen. Dies und die Tatsache, daß die Stützelemente als Rutschkupplung verwendet werden, ermöglicht es, verhältnismäßig viele Scheiben als Arbeitselementträger beispielsweise in einem gegenseitigen Abstand von 100 mm anzuordnen. Die Anordnung von verhältnismäßig vielen Arbeitselementträgern hat den Vorteil, daß dann, wenn einer der Arbeitselementträger stillsteht, weil eines seiner Arbeitselemente an einem Fahrzeugteil hängegeblieben ist, nur eine sehr kleine oder überhaupt keine Fläche ungewaschen bleibt. Die weiterrotierenden Arbeitselemente der benachbarten Arbeitselementträger überdecken nämlich ganz oder teilweise den Arbeitsbereich der gestoppten Arbeitselemente.

Weitere vorteilhafte Ausgestaltungen sind in den übrigen Unteransprüchen gekennzeichnet.

Die Erfindung ist in folgendem, anhand von mehreren in der Zeichnung dargestellten Ausführungsbeispielen näher erläutert. Es zeigen:
- Figur 1: ein erstes Ausführungsbeispiel der Walze im Längsschnitt,
- Figur 2: ein zweites Ausführungsbeispiel im Längsschnitt,
- Figur 3: einen Querschnitt nach der Linie III-III der Figur 1,
- Figur 4: einen Querschnitt mit einer zweiten Ausführungsform des Arbeitselementträgers und der Arbeitselemente,
- Figur 5: einen Axialschnitt eines dritten Ausführungsbeispieles,
- Figur 6: einen Axialschnitt eines vierten Ausführungsbeispieles,
- Figur 7: einen Axialschnitt eines fünften Ausführungsbeispieles,
- Figur 8: einen Querschnitt nach der Linie VIII-VIII der Figur 7,
- Figur 9: einen ähnlichen Querschnitt mit einseitig stärkerer Belastung der Arbeitselemente.
- Figur 10: einen Axialschnitt eines weiteren Ausführungsbeispieles,
- Figur 11: drei verschiedene streifenförmige Arbeitselemente.

Nachdem die erfindungsgemäße Walze in gleichartiger Ausgestaltung zum Waschen oder Polieren eines Fahrzeuges verwendet werden kann, werden die auf die Fahrzeugoberfläche einwirkenden und mit dieser in Kontakt kommenden Waschelemente bzw. Polierelemente mit dem Sammelausdruck "Arbeitselemente" bezeichnet. Diese Arbeitselemente können als Lappen oder Streifen aus weichem Textilmaterial, wie Filz, Vlies, Stoff oder dgl. bzw. auch aus natürlichem oder künstlichem Fell bestehen. Als demgegenüber steifere, biegsame Stützelemente kommen hauptsächlich Borsten aus Kunststoff oder auch Leisten aus biegsamem Kunststoff, die in radialer Richtung geschlitzt sind, in Frage. Gegebenenfalls könnten die Stützelemente auch aus geeignetem Schaumstoff bestehen.

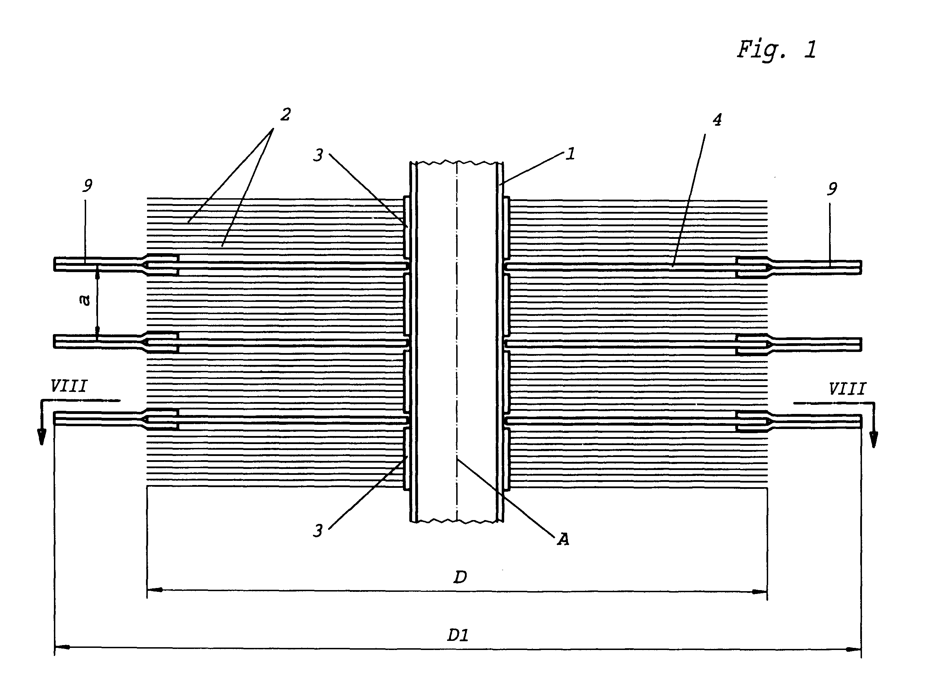

Die erfindungsgemäße Waschbürste weist einen rotierend antreibbaren Walzenkern 1 auf, der aus einem Rohr bestehen kann. Die Stützelemente 2, vorzugsweise Borsten, sind mit ihren radial inneren Enden in einem Stützelementträger 3 fixiert. Hierbei kann es sich um eine Kunststoffmatte handeln. Diese zunächst ebene Kunststoffmatte wird um den Walzenkern 1 herumgelegt und mittels geeigneter Befestigungsmittel, beispielsweise Schrauben, mit dem Walzenkern drehfest, jedoch austauschbar verbunden. Bei den in den Figuren 1, 2 und 5 dargestellten Ausführungsbeispielen weisen die Stützelementträger 3 eine verhältnismäßig kurze axiale Länge von beispielsweise jeweils 100 mm auf. Sie werden in gegenseitigem axialen Abstand auf dem Walzenkern 1 fixiert. Dieser Abstand ist so bemessen, daß der nachstehend näher beschriebene Arbeitselementträger 4 zwischen zwei benachbarten Stützelementträgern 3 genügend Platz hat.

Bei dem Arbeitselementträger 4 handelt es sich zweckmäßig um eine Scheibe aus flexiblem Material. Die Scheibe kann vorzugsweise aus Filz mit einer Dicke von beispielsweise 4 mm bestehen. Anstelle von Filz können jedoch auch andere flexible Materialien, wie Gewebe, Kunststoff oder dgl. verwendet werden. Bei den in den Figuren 1 - 5 dargestellten Ausführungsbeispielen weist der als Scheibe ausgebildete Arbeitselementträger 4 bzw. 4' eine zentrale kreisförmige Ausnehmung 5 auf, deren Durchmesser etwas größer ist als der Durchmesser des Walzenkerns 1, so daß die Scheibe 4, 4' sich leicht auf dem Walzenkern drehen läßt. Der Arbeitselementträger 4 kann jedoch auch zwischen zwei in axialem Abstand voneinander angeordneten Borstenreihen auf einen Stützelementträger 3 größerer Länge von beispielsweise 300 oder 400 mm drehbar angeordnet sein. Der Durchmesser der kreisförmigen Ausnehmung 5 ist dann dem Durchmesser des Stützelementträgers 3 angepaßt, so daß der Arbeitselementträger 4 sich gegenüber dem Stützelementträger 3 drehen kann.

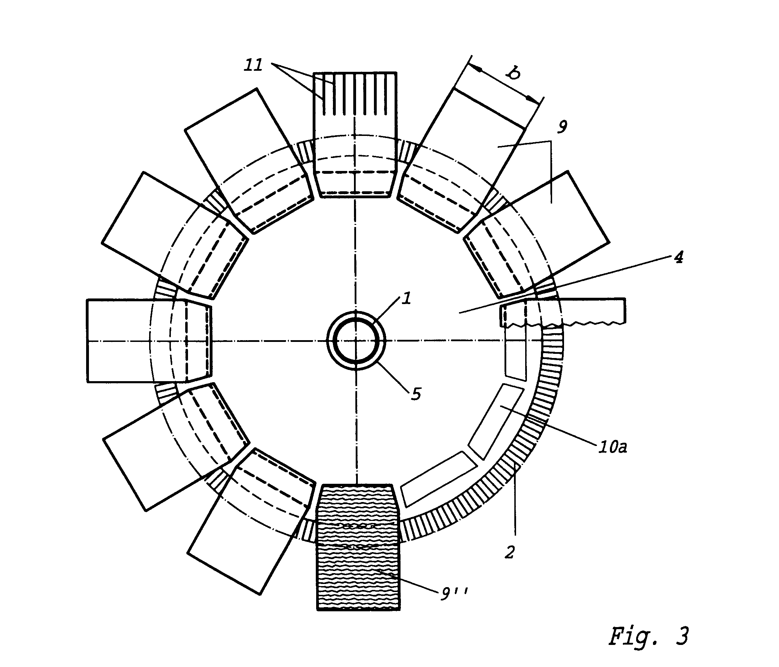

Wenn der Arbeitselementträger 4 gemäß Figur 3 als in sich geschlossene Scheibe ausgebildet ist, muß er bei der Montage vom Ende des Walzenkernes her auf diesen aufgefädelt werden, wonach jeweils ein Stützelementträger am Walzenkern befestigt wird.

Zum Waschen oder Polieren eines Fahrzeuges wird die Walze rotierend angetrieben . Die über die Stützelementträger 3 drehfest mit dem Walzenkern verbundenen Stützelemente 2 drehen sich zusammen mit dem Walzenkern. Da sie mit den Arbeitselementträgern 4 und auch den Arbeitselementen 9 in Kontakt sind, werden die Arbeitselementträger 4 und damit auch die Arbeitselemente 9 durch Reibung von den Stützelementen 2 mitgenommen und angetrieben. Je rauher die Oberfläche der Arbeitselementträger 4 ist und je weiter die Arbeitselemente 9 mit ihren radial inneren Enden in die Stützelemente 2, insbesondere die Borsten eintauchen, desto größer ist das maximal von den Stützelementen 2 auf die Arbeitselementträger bzw. die Arbeitselemente 9 übertragbare Drehmoment. Bei Bedarf kann dieses Drehmoment auch durch zusätzlich an den Arbeitselementträgern 4 angebrachte Vorsprünge oder dgl. erhöht werden. Bleibt eines der Arbeitselemente 9 an einem Fahrzeugteil hängen, so wird das maximal übertragbare Drehmoment überwunden. Das betreffende Arbeitselement 9 und der zugehörige Arbeitselementträger werden gestoppt, während sich die übrigen Teile der Walze weiterdrehen. Damit wirken die Stützelemente bzw. Borsten 2 wie eine Rutschkupplung. Gleichzeitig haben die Stützelemente 2 den gewünschten Polstereffekt. Die Arbeitselemente 9 legen sich zunächst bei stärker werdendem Anpreßdruck über die Stützelemente 2. Nimmt der Anpreßdruck weiter zu, dann hat der Antriebsmotor der Walze auch eine höhere Wirkstromaufnahme. Durch diese höhere Wirkstromaufnahme wird in bekannter Weise ein Signal an einen Stellmotor abgegeben, der dann die Walze so weit von der Fahrzeugoberfläche abhebt, bis wieder die vorbestimmte Wirkstromaufnahme am Antriebsmotor vorhanden ist. Durch das Abheben der Walze bzw. auch die Weiterbewegung des Fahrzeuges gegenüber der Walze, löst sich das hängengebliebene Arbeitselement in der Regel von selbst von dem betreffenden Fahrzeugteil und der betreffende Arbeitselementträger 4 wird dann wieder durch Reibung von den Stützelementen 2 mitgenommen.

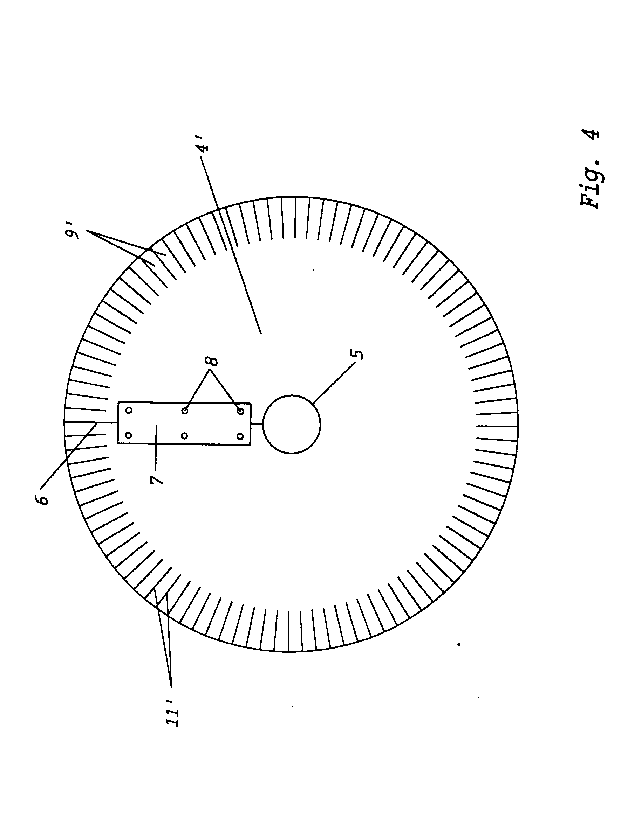

Um die Montage und insbesondere den Austausch verschlissener oder beschädigter Arbeitselementträger zu erleichtern, kann ein solcher Arbeitselementträger 4', wie es in Figur 4 dargestellt ist, mit einem radialen Schlitz 6 versehen sein. Dank dieses radialen Schlitzes 6 kann der flexible Arbeitselementträger 4' von der Seite her über den Walzenkern 1 geschoben werden, wonach der Schlitz 6 durch geeignete Verbindungsmittel geschlossen wird. Als geeignete Verbindungsmittel kommen beispielsweise ein Klettverschluß, Metall- oder Kunststoffbänder oder auch eine dünne Platte 7 in Frage, die mittels Kunststoffnieten 8 oder dgl. mit dem Arbeitselementträger 4' verbunden wird.

Der Durchmesser des Arbeitselementträgers 4 entspricht in etwa dem Wirkdurchmesser D der Borsten. Er kann jedoch auch etwas kleiner sein. Die lappenförmigen Arbeitselemente 9 sind in der Nähe des Umfanges des Arbeitselementträgers mit diesem zweckmäßig lösbar verbunden. Als läsbare Verbindung kommen hauptsächlich Klettverschlüsse in Frage, deren eines Teil 10a jeweils am Arbeitselementträger 4 und deren anderes Teil am Arbeitselement 9 angenäht oder in sonstiger geeigneter Weise befestigt ist. Bei den in Figur 1 - 3 dargestellten Ausführungsbeispielen ist jedes Arbeitselement 9 an der Oberseite und der Unterseite über Klettverschlüsse 10 mit dem Arbeitselementträger 4 verbunden. Die Arbeitselemente 9 sind hierbei im wesentlichen in der Ebene des scheibenförmigen Arbeitselementträgers 4 angeordnet. Wenn die Walze frei rotiert, rotieren auch die Arbeitselemente 9 jeweils in einer Radialebene. Bei Stillstand der Walze nehmen sie infolge ihres Eigengewichtes eine unterschiedliche Stellung ein. Kommen sie mit der Fahrzeugoberfläche in Berührung, dann verwinden sich die lappenförmigen Arbeitselemente 9 und ihre radial äußeren Bereiche schmiegen sich an die Fahrzeugoberfläche an. Bei erhöhtem Anpreßdruck liegen sie fast vollflächig auf der Fahrzeugoberfläche auf und werden dann an ihrer der Fahrzeugoberfläche abgewandten Seite von den Stützelementen 2 abgestützt. Die Breite b der Arbeitselemente 9 ist im Verhältnis zum axialen Abstand a der Arbeitselementträger 4 so abgestimmt, daß die Breite b wesentlich größer ist als der axiale Abstand a. Bei einem axialen Abstand a von beispielsweise 100 mm beträgt die Breite b etwa 100 mm. Hierdurch wird erreicht, daß die Arbeitselemente 9 die Stützelemente 2 vollständig überdecken, wenn sie durch Kontakt mit der Fahrzeugoberfläche an die Stützelemente 2 angedrückt werden. Hierdurch wird ein direkter Kontakt der Stützelemente mit der Fahrzeugoberfläche vermieden. Als Arbeitsdurchmesser D1 der Arbeitselemente 9 wird derjenige Durchmesser bezeichnet, den die radial äußeren Enden der Arbeitselemente bei frei rotierender Walze beschreiben. Bei einem Wirkdurchmesser D der Stützelemente 2 von 900 mm kann der Arbeitsdurchmesser D1 zweckmäßig 1200 bis 1300 mm betragen.

Wie man aus Figur 3, oben, erkennen kann, können die aus Filz bestehenden Arbeitselemente 9 an ihren radial äußeren Enden durch Schlitze 11 in einzelne Streifen aufgeteilt sein.

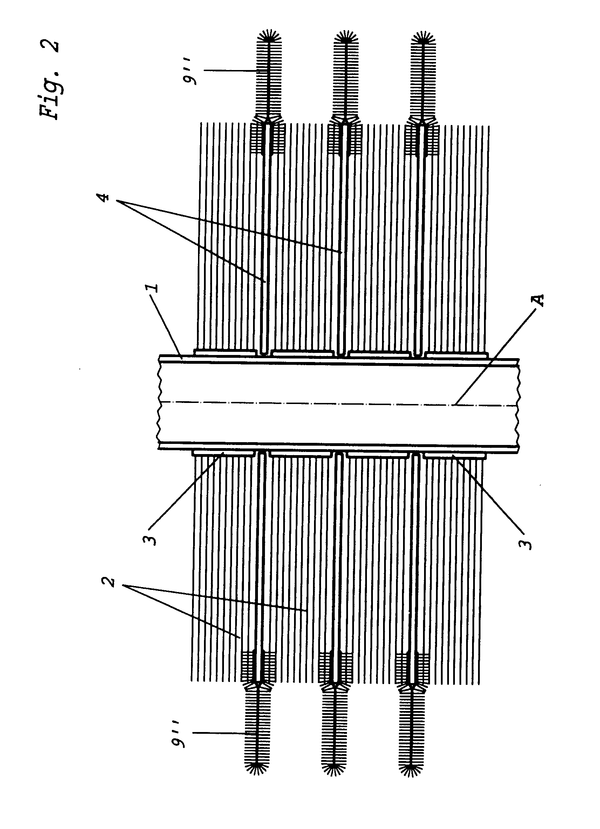

Das in Figur 2 dargestellte Ausführungsbeispiel unterscheidet sich von dem in Figur 1 dargestellten Ausführungsbeispiel nur durch das Material der Arbeitselemente. Die Arbeitselemente 9" bestehen bei dem in Figur 2 dargestellten Ausführungsbeispiel aus Naturfell oder Kunstfell. Sie sind ebenfalls durch Klettverschlüsse mit dem Arbeitselementträger 4 verbunden. Zur Verbesserung der Reinigungswirkung kann das aus Fell bestehende Arbeitselement 9" auch durch Schlitze 11" in einzelne Streifen aufgeteilt sein, wie es in Figur 3, unten, dargestellt ist.

Wenn der als Scheibe ausgebildete Arbeitselementträger 4' aus Filz oder Gewebe besteht, ergibt sich eine besonders vorteilhafte Ausgestaltungsmöglichkeit. In diesem Fall können nämlich die Arbeitselemente 9' durch den radial äußeren Bereich der Scheibe 4' gebildet sein, indem die Scheibe in diesem Bereich eine Vielzahl von radialen Einschnitten 11' aufweist, die sich von ihrem Umfang radial nach innen erstrecken. Die Arbeitselemente 9' sind also einstückig mit der Scheibe 4' ausgebildet. Die Schlitze 11' und auch die zentrale Ausnehmung 5 sowie der Umfang der Scheibe können durch ein geeignetes Werkzeug in einem einzigen Arbeitsgang aus einer größeren Platte ausgestanzt werden, wodurch die Herstellungskosten wesentlich gesenkt werden. Bei Verschleiß der Arbeitselemente 9' wird einfach der gesamte Arbeitselementträger 4' gegen einen neuen ausgetauscht, was weniger Arbeit erfordert, als das Abmontieren und Neubefestigen von auswechselbaren Arbeitselementen 9 gemäß Figur 3.

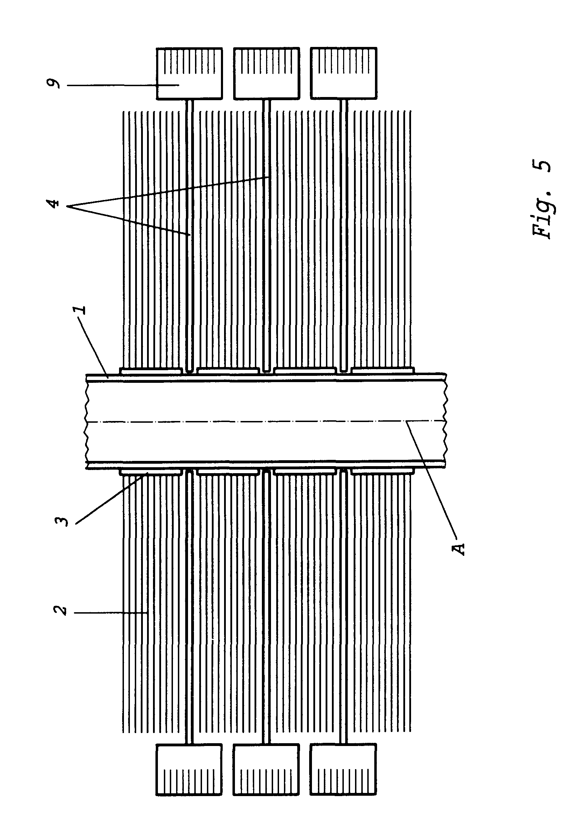

Anhand der Figur 5 soll gezeigt werden, daß die Arbeitselemente 9 auch in anderer Anordnung mit den Arbeitselementträgern 4 verbunden werden können. Während bei den vorhergehend beschriebenen Ausführungsbeispielen die Arbeitselemente 9 jeweils in der Ebene der scheibenförmigen Arbeitselementträger 4 angeordnet sind, erfolgt die Anordnung der Arbeitselemente 9 bei dem in Figur 5 dargestellten Ausführungsbeispiel senkrecht zur Ebene der Arbeitselementträger 4, d.h. parallel zur Drehachse A der Walze. Auch hier können die Arbeitselemente 9 in der vorhergehend beschriebenen Weise lösbar mit den Arbeitselementträgern 4 verbunden sein, z.B. durch Klettverschlüsse oder dgl..

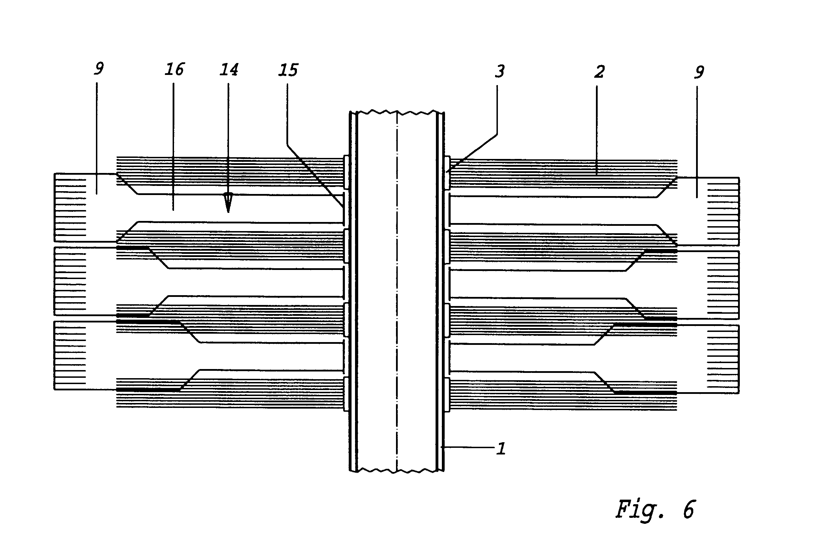

Bei dem in Figur 6 dargestellten Ausführungsbeispiel umfaßt der Arbeitselementträger 14 jeweils einen Ring 15, der drehbar auf dem Walzenkern 1 angeordnet ist. Ferner sind die Arbeitselemente 9 jeweils durch Band 16 mit dem Ring 15 verbunden. Die Arbeitselemente 9 können wie bei den vorhergehend beschriebenen Ausführungsbeispielen an den Bändern 16 austauschbar befestigt sein. Bei diesem Ausführungsbeispiel kommen die Stützelemente 2, vorzugsweise die Borsten, hauptsächlich in Kontakt mit den Arbeitselementen 9, wodurch deren Drehmitnahme erfolgt. Man kann das maximale Drehmoment dadurch verändern, daß man die Arbeitselemente 9 mehr oder weniger tief in die Borsten hineinreichen läßt.

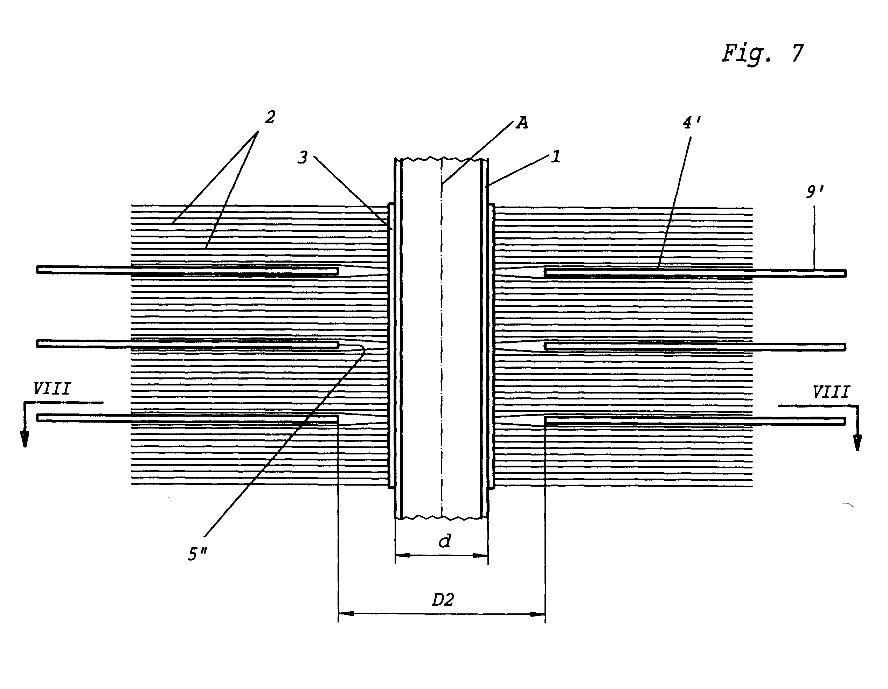

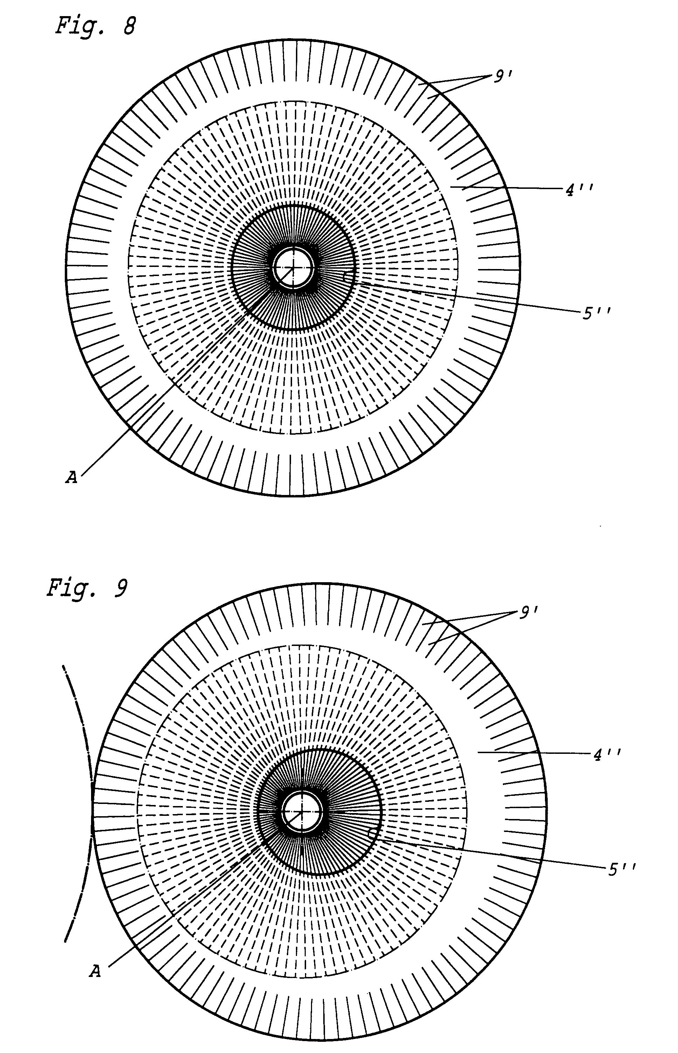

Während bei den vorangegangenen Ausführungsbeispielen die zentrale Ausnehmung 5 des Arbeitselementträgers 4 bzw. 4' jeweils in etwa dem Durchmesser des Walzenkerns 1 bzw. des Stützelementträgers 3 entspricht, ist bei dem in Figur 7 - 9 dargestellten Ausführungsbeispiel der Durchmesser D2 der Ausnehmung 5" im Arbeitselementträger 4" wesentlich größer als der Durchmesser d des Walzenkerns 1 bzw. des Stützelementträgers 3. Auf diese Weise ist der Arbeitselementträger 4" gegenüber der Walzenachse A auch radial beweglich. Diese radiale Beweglichkeit hat den Vorteil, daß bei stark vorspringenden Teilen der Fahrzeugoberfläche sich der betreffende Arbeitselementträger 4" gegenüber der Walzenachse A verlagern kann, wie es in Figur 9 dargestellt ist. Die oberhalb oder unterhalb des verlagerten Stützelementträgers vorgesehenen Arbeitselementträger 4" behalten jedoch ihre ursprüngliche, gegenüber der Walzenachse zentrierte Lage, weil sie mit Fahrzeugteilen in Berührung sind, die weniger weit vorstehen. Auf diese Weise kann eine noch bessere Wasch- oder Polierwirkung erzielt werden. Da sich nämlich ein oder mehrere Arbeitselementträger gegenüber der Walzenachse A bei stark vorspringenden Teilen der Fahrzeugoberfläche verlagern können, erhöht sich der Anpreßdruck der Walze nicht oder nur unwesentlich, so daß durch die stark vorspringenden Teile kein vorzeitiges Abheben der Walze von der Fahrzeugoberfläche stattfindet. Durch die radiale Beweglichkeit der Arbeitselementträger nehmen die Arbeitselemente die Kontur des Fahrzeuges an bevor die Walze durch den erhöhten Anpreßdruck mechanisch oder elektrisch vom Fahrzeug weg bewegt wird. Es wurde festgestellt, daß sich ein durch vorspringende Fahrzeugteile verlagerter Arbeitselementträger wieder selbsttätig gegenüber der Walzenachse zentriert, wenn die Arbeitselemente des betreffenden verlagerten Arbeitselementträgers wieder das vorspringende Teil verlassen haben.

Die gegenüber dem Durchmesser d des Walzenkernes 1 wesentlich größere zentrale Ausnehmung 5" hat darüber hinaus noch einen weiteren Vorteil. Man kann den Durchmesser D2 der Ausnehmung 5' nämlich so groß machen, daß der Arbeitselementträger 4" zur Montage über die Stützelemente 2 der ruhenden Walze schiebbar ist. Die Stützelemente, insbesondere Borsten, werden beim Überschieben zwar zur Walzenachse A hin umgebogen, jedoch spreizen sie sich wieder, wenn der betreffende Arbeitselementträger seine vorbestimmte Stellung zwischen zwei Borstenreihen erreicht hat. Die Spreizung der Borsten wird auch durch die Fliehkraft der rotierenden Walze wieder hergestellt.

Bezüglich der übrigen Ausgestaltung des Arbeitselementträgers 4" und seiner Arbeitselemente 9' treffen die Ausführungen, die zu den Ausführungsbeispielen gemäß Figur 1 - 4 gemacht worden sind, sinngemäß zu. Die Arbeitselemente können entweder mit den Arbeitselementträgern leicht lösbar verbunden sein oder mit diesen auch aus einem Stück bestehen, wie es anhand der Figur 4 beschrieben worden ist.

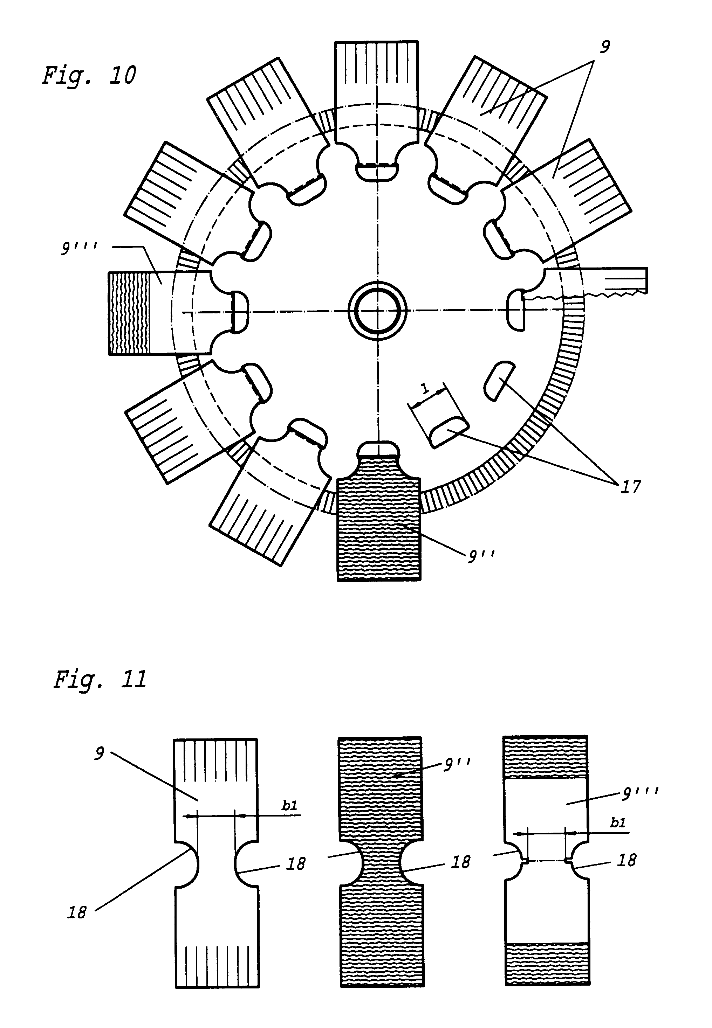

Das in Figur 10 und 11 dargestellte Ausführungsbeispiel zeigt eine besonders kostengünstige, auswechselbare Befestigung der Arbeitselemente 9, 9", 9''' an dem als Scheibe ausgebildeten Arbeitselementträger 4. Der aus flexiblem Material, wie Kunststoff, Filz oder Gewebe, bestehende Arbeitselementträger 4 weist an seinem radial äußeren Bereich zur Halterung jedes Arbeitselementes 9, 9", 9''' einen sich im wesentlichen in Umfangsrichtung erstreckenden, länglichen Ausschnitt 17 auf. Jedes Arbeitselement 9, 9", 9''' ist, wie in Figur 11 gezeigt, streifenförmig ausgebildet. Das Arbeitselement 9 besteht aus Filz, das Arbeitselement 9" aus Fell, das Arbeitselement 9''' aus Filz oder Gewebe. Es ist an seinen beiden Enden jeweils mit Fell bestückt. Die Breite b der Arbeitselemente 9, 9", 9''' ist größer als die Länge l des Ausschnittes 17. Die Arbeitselemente 9, 9", 9''' weisen jeweils in ihrem mittleren Bereich zwei seitliche Ausnehmungen 18 auf. Durch diese Ausnehmungen 18 werden die Arbeitselemente 9, 9", 9''' in ihrem mittleren Bereich auf eine Breite b1 verjüngt, die in etwa der Länge l des Ausschnittes 17 entspricht. Zur Befestigung des jeweiligen Arbeitselementes an dem Arbeitselementträger 4 wird das Arbeitselement zur Hälfte durch den zugehörigen Ausschnitt 17 hindurchgezogen. Die Breite des Ausschnittes 17 muß dabei entsprechend groß bemessen sein, damit das Arbeitselement in zusammengefaltetem oder zusammengedrücktem Zustand hindurchgezogen werden kann, obwohl seine Breite b größer ist als die Länge l des Ausschnittes 17. Nachdem das Arbeitselement 9 zur Hälfte durch den zugehörigen Ausschnitt 17 hindurchgezogen ist, kommt der verjüngte mittlere Bereich in dem Ausschnitt 17 zu liegen. Die beiden Enden des Arbeitselementes werden dann radial nach außen geklappt, so daß sie aufeinander und in der Ebene des Arbeitselementträgers 4 zu liegen kommen. Auf diese Weise ist jedes Arbeitselement 9, 9", 9''' sehr einfach mit dem Arbeitselementträger 4 verbindbar und kann auch bei Verschleiß in einfacher Weise ausgetauscht werden. Sowohl die Arbeitselemente als auch der Arbeitselementträger kann durch Stanzen erzeugt werden. Es entsteht nur sehr geringer Verschnitt.

## Patentansprüche

1. Wasch- oder Polierwalze für Fahrzeugwaschanlagen, mit einem rotierend antreibbaren Walzenkern (1), der mit einer Kombination von streifenförmigen Arbeitselementen (9,9',9'') aus weichem textil- oder fellartigem Material und aus gegebenenfalls steiferen, biegsamen Stützelementen (2) versehen ist, wobei jeweils mehrere Arbeitselemente (9,9',9'') an einem Arbeitselementträger (4,4',4'',14) und mehrere Stützelemente (2) an einem drehfest mit dem Walzenkern (1) verbundenen Stützelementträger (3) angeordnet sind und wobei bei frei rotierender Walze der Arbeitsdurchmesser (D1) der Arbeitselement (9,9',9''), d.h. der Durchmesser, den die radial äußeren Enden der Arbeitselemente (9,9',9'') bei frei rotierender Walze beschreiben, größer ist als der Wirkdurchmesser (D) der Stützelemente (2), d.h. der radial äußere Durchmesser der Stützelemente (2), so daß im wesentlichen nur die Arbeitselemente (9,9',9'') in Kontakt mit der Fahrzeugoberfläche kommen, **dadurch gekennzeichnet, daß** mehrere Arbeitselementträger (4, 4', 4"; 14) in Achsrichtung der Walze in solchem gegenseitigen Abstand nebeneinander vorgesehen sind, daß die Arbeitsbereiche ihrer Arbeitselemente (9, 9', 9") zumindest aneinander angrenzen, daß die Arbeitselementträger (4, 4', 4"; 14) relativ zum Walzenkern (1) drehbar sind, daß die Stützelemente (2) zwischen benachbarte Arbeitselementträger (4, 4', 4"; 14) hineinreichen, und daß die Drehmitnahme der Arbeitselemente (9, 9', 9") mittels Reibung durch die an ihnen und/oder den Arbeitselementträgern (4, 4', 4"; 14) anliegende Stützelemente (2) erfolgt.

2. Walze nach Anspruch 1, **dadurch gekennzeichnet, daß** die Arbeitselementträger (4, 4', 4") Scheiben aus flexiblem Material sind.

3. Walze nach Anspruch 1 oder 2, **dadurch gekennzeichnet, daß** jeder Arbeitselementträger (4, 4', 4", 14) eine zentrale, kreisförmige Ausnehmung (5, 5', 5") aufweist, die den Walzenkern (1) oder einen den Walzenkern konzentrisch umgebenden Stützelementträger (3) zumindest mit solchem Abstand umgibt, daß der Arbeitselementträger gegenüber dem Walzenkern bzw. dem Stützelementträger drehbar ist.

4. Walze nach Anspruch 3, **dadurch gekennzeichnet, daß** der Durchmesser (D2) der Ausnehmung (5") wesentlich größer ist als der Durchmesser (d) des Walzenkerns (1) bzw. des Stützelementträgers (3), so daß der Arbeitselementträger gegenüber der Walzenachse (A) auch radial beweglich ist.

5. Walze nach Anspruch 4, **dadurch gekennzeichnet, daß** der Durchmesser (D2) der Ausnehmung (5") so groß ist, daß der Arbeitselementträger (4") zur Montage über die Stützelemente (2), insbesondere Borsten, der ruhenden Walze schiebbar ist.

6. Walze nach einem der Ansprüche 2 - 4, **dadurch gekennzeichnet, daß** der als Scheibe ausgebildete Arbeitselementträger (4') einen sich bis in die Ausnehmung erstreckenden Radialschlitz (6) aufweist, der nach der Montage der Scheibe auf der Walze durch Verbindungsmittel (7, 8) schließbar ist.

7. Walze nach einem der Ansprüche 1 - 6, **dadurch gekennzeichnet, daß** die Arbeitselemente (9, 9") über leicht lösbare Verbindungsmittel (10) mit dem Arbeitselementträger (4) verbunden sind.

8. Walze nach Anspruch 7, **dadurch gekennzeichnet, daß** die Verbindungsmittel als Klettverschlüsse (10) ausgebildet sind.

9. Walze nach einem der Ansprüche 1 - 8, **dadurch gekennzeichnet, daß** die Arbeitselementträger (4) aus flexiblem Kunststoff bestehen.

10. Walze nach einem der Ansprüche 1 - 8, **dadurch gekennzeichnet, daß** die Arbeitselementträger (4, 4', 4") aus textilem Material, wie Filz, Gewebe oder dgl. bestehen.

11. Walze nach einem der Ansprüche 1 - 10, **dadurch gekennzeichnet, daß** die Arbeitselemente (9, 9') so an den Arbeitselementträgern (4, 4', 4") angeordnet sind, daß sie bei frei rotierender Walze im wesentlichen jeweils in Radialebenen angeordnet sind.

12. Walze nach Anspruch 10, **dadurch gekennzeichnet, daß** der Arbeitselementträger (4', 4") als Scheibe aus textilem Material ausgebildet ist und die Arbeitselemente (9') durch den radial äußeren Bereich der Scheibe gebildet sind, indem die Scheibe in diesem Bereich eine Vielzahl von radialen Einschnitten (11') aufweist, die sich von ihrem Umfang radial nach innen erstrecken.

13. Walze nach einem der Ansprüche 1 - 11, **dadurch gekennzeichnet, daß** der Arbeitselementträger (14) einen Ring (15) umfaßt, der drehbar auf dem Walzenkern (1) angeordnet ist und daß die Arbeitselemente (9) jeweils durch ein Band (16) mit dem Ring (15) verbunden sind.

14. Walze nach Anspruch 13, **dadurch gekennzeichnet, daß** das Arbeitselement (9) über einen Klettverschluß mit dem Band (16) lösbar verbunden ist.

15. Walze nach einem der Ansprüche 1 - 14, **dadurch gekennzeichnet, daß** auf dem Walzenkern (1) in dessen Achsrichtung abwechselnd Stützelementträger (3) und Arbeitselementträger (4, 4'; 14) angeordnet sind.

16. Walze nach Anspruch 15, **dadurch gekennzeichnet, daß** die axiale Länge (a) der Stützelementträger (3) kleiner ist als die Arbeitsbreite (b) der Arbeitselemente (9) in Achsrichtung der Walze.

17. Walze nach einem der Ansprüche 1 - 16, **dadurch gekennzeichnet, daß** die Stützelemente (2) Borsten sind.

18. Walze nach einem der Anspruche 1 - 11, **dadurch gekennzeichnet, daß** der Arbeitselementträger (4) als Scheibe ausgebildet ist und an seinem radial äußeren Bereich zur Halterung jedes Arbeitselementes (9, 9", 9 ''') einen sich im wesentlichen in Umfangsrichtung erstreckenden, länglichen Ausschnitt (17) aufweist, daß jedes Arbeitselement (9, 9", 9''') streifenförmig ausgebildet ist, und eine Breite (b) aufweist, die größer ist als die Länge (1) des Ausschnittes (17), und daß das Arbeitselement (9, 9", 9''') in seinem mitteleren Bereich durch Ausnehmungen (18) auf eine in etwa der Länge (1) des Ausschnittes (17) entsprechende Breite (b1) ver jüngt ist, derart, daß das Arbeitselement zur Hälfte durch den Ausschnitt ziehbar und dann seine beiden Hälften radial nach außen umschlagbar ist.

## Claims

1. A washing or polishing roller for vehicle washing installations, with a rotatably driven roller core (1) which is provided with a combination of strip-formed working elements (9, 9', 9") of soft textile or fur-like material and of flexible support elements (2) which are stiffer if desired, wherein each plurality of working elements (9, 9', 9") is arranged on a working element carrier (4, 4', 4", 14) and each plurality of support elements (2) is arranged on a support element carrier (3) rotationally fast with the roller core (1) and wherein the working diameter (D1) of the working elements (9, 9', 9"), e.g. the diameter described by the radially outer ends of the working elements (9, 9', 9"), is greater than the effective diameter (D) of the support elements (2), e.g. the radially outer diameter of the support elements (2), when the roller is rotating freely, so that substantially only the working elements (9, 9', 9") come into contact with the vehicle surface, **characterized in that** a
plurality of working element carriers (4, 4', 4"; 14) are provided alongside one another at such a mutual spacing that the working regions of their working elements (9, 9', 9") at least border on one another, **in that** the working element carriers (4, 4', 4"; 14) can rotate relative to the roller core (1), **in that** the support elements (2) extend between adjoining working element carriers (4, 4', 4"; 14) and **in that** the rotational entrainment of the working elements (9, 9', 9") is effected by means of friction through the support elements (2) bearing thereon and/or on the working element carriers (4, 4', 4"; 14).

2. A roller according to claim 1, **characterized in that** the working element carriers (4, 4', 4") are discs of flexible material.

3. A roller according to claim 1 or 2, **characterized in that** each working element carrier (4, 4', 4", 14) has a central, circular hole (5, 5', 5") which surrounds the roller core (1) or a support element carrier (3) concentrically surrounding the roller core at least with such a spacing that the working element carrier is rotatable relative to the roller core or the support element carrier.

4. A roller according to claim 3, **characterized in that** the diameter (D2) of the hole (5") is substantially larger than the diameter (d) of the roller core (1) or the support element carrier (3), so that the working element carrier is also radially movable relative to the roller axis (A).

5. A roller according to claim 4, **characterized in that** the diameter (D2) of the hole (5") is so great that the working element carrier (4") can be slid for assembly over the support elements (2), especially bristles, of the stationary roller.

6. A roller according to any of claims 2 - 4, **characterized in that** the working element carrier (4') formed as a disc has a radial slit (6) extending into the hole and which can be closed by connecting means (7, 8) after mounting the disc on the roller.

7. A roller according to any of claims 1 - 6, **characterized in that** the working elements (9, 9") are attached to the working element carrier (4) by easily released connecting means (10).

8. A roller according to claim 7, **characterized in that** the connecting means are in the form of burr fasteners (10).

9. A roller according to any of claims 1 - 8, **characterized in that** the working element carriers (4) consist of flexible plastics material.

10. A roller according to any of claims 1 - 8, **characterized in that** the working element carriers (4, 4', 4") consist of textile material such as felt, woven material or the like.

11. A roller according to any of claims 1 - 10, **characterized in that** the working elements (9, 9') are so arranged on the working element carriers (4, 4', 4") that they are arranged substantially in respective radial planes with the roller rotating freely.

12. A roller according to claim 10, **characterized in that** the working element carrier (4', 4") is formed as a disc from textile material and the working elements (9') are formed by the radially outer region of the disc, **in that** the disc has a plurality of radially cuts (11') in this region, which extend from its periphery radially inwards.

13. A roller according to any of claims 1 - 11, **characterized in that** the working element carrier (14) comprises a ring (15) which is arranged rotatably on the roller core (1) and **in that** the working elements (9) are each connected to the ring (15) by a band (16).

14. A roller according to claim 13, **characterized in that** the working element (9) is releasably attached to the band (16) by a burr fastener.

15. A roller according to any of claims 1 - 14, **characterized in that** support element carriers (3) and working element carriers (4, 4'; 14) are arranged alternately on the roller core (1) in its axial direction.

16. A roller according to claim 15, **characterized in that** the axial length (a) of the support element carriers (3) is less than the working width (b) of the working elements (9) in the axial direction of the roller.

17. A roller according to any of claims 1 - 16, **characterized in that** the support elements (2) are bristles.

18. A roller according to any of claims 1 - 11, **characterized in that** the working element carrier (4) is formed as a disc and has an elongated cut-out (17) extending substantially in the circumferential direction in its radially outer region for holding each working element (9, 9", 9'''), **in that** each working element (9, 9", 9''') is of strip form and has a width (b) which is larger than the length (1) of the cut-out (17) and **in that** the working element (9, 9", 9"') is narrowed in its middle region by recesses (18) to a width (bl) corresponding approximately to the length (1) of the cut-out (17), so that the working element can be pulled half-way through the cut-out and its two halves then be folded radially outwardly.

## Revendications

1. Rouleau de lavage ou de polissage pour installation de lavage de véhicules, comprenant un noyau de rouleau (1) pouvant être entraîné en rotation, qui est pourvu d'une combinaison d'éléments de travail (9, 9', 9") en forme de lame en matière textile ou du type peau, souple, et d'éléments d'appui (2) flexibles, éventuellement plus rigides, plusieurs éléments de travail (9, 9', 9") étant chaque fois disposés sur un support d'éléments de travail (4, 4', 4" ; 14) et plusieurs éléments d'appui (2) étant chaque fois disposés sur un support d'éléments d'appui (3) relié d'une manière fixe en rotation au noyau de rouleau (1), tandis que, lorsque le rouleau tourne librement, le diamètre de travail (D1) des éléments de travail (9, 9', 9"), c'est-à-dire le diamètre que les extrémités radialement extérieures des éléments de travail (9, 9', 9") décrivent lorsque le rouleau tourne, est supérieur au diamètre d'action (D) des éléments d'appui (2), c'est-à-dire le diamètre radialement extérieur des éléments d'appui (2), de sorte que ce ne sont essentiellement que les éléments de travail (9, 9', 9") qui viennent en contact avec la surface de véhicule, **caractérisé en ce que** plusieurs supports d'éléments de travail (4, 4', 4" ; 14) sont prévus l'un à côté de l'autre suivant la direction axiale du rouleau à une distance mutuelle telle que les domaines de travail de leurs éléments de travail (9, 9', 9") sont au moins adjacents l'un à l'autre, **en ce que** les supports d'éléments de travail (4, 4', 4" ; 14) sont rotatifs vis-à-vis du noyau de rouleau (1), **en ce que** les éléments d'appui (2) pénètrent entre des supports d'éléments de travail (4, 4', 4" ; 14) voisins et **en ce que** l'entraînement en rotation des éléments de travail (9, 9', 9") a lieu par frottement au moyen des éléments d'appui (2) appliqués sur eux et/ou sur les supports d'éléments de travail (4, 4', 4" ; 14).

2. Rouleau suivant la revendication 1, **caractérisé en ce que** les supports d'élément de travail (4, 4', 4") sont des disques en matière flexible.

3. Rouleau suivant la revendication 1 ou 2, **caractérisé en ce que** chaque support d'éléments de travail (4, 4', 4", 14) comporte un évidement (5, 5', 5") central circulaire qui entoure le noyau de rouleau (1) ou le support d'éléments d'appui (3) entourant d'une manière concentrique le noyau de rouleau, à au moins une distance telle que le support d'éléments de travail est rotatif vis-à-vis du noyau de rouleau ou du support d'éléments d'appui.

4. Rouleau suivant la revendication 3, **caractérisé en ce que** le diamètre (D2) de l'évidement (5") est beaucoup plus grand que le diamètre (d) du noyau de rouleau (1) ou du support d'éléments d'appui (3), de sorte que le support d'éléments de travail est également mobile radialement vis-à-vis de l'axe de rouleau (3).

5. Rouleau suivant la revendication 4, **caractérisé en ce que** le diamètre (D2) de l'évidement (5") est si grand que le support d'éléments de travail (4") peut glisser en vue du montage sur les éléments d'appui (2), notamment des poils de brosse.

6. Rouleau suivant l'une des revendications 2 - 4, **caractérisé en ce que** le support d'éléments de travail (4') réalisé en forme de disque comporte une fente radiale (6) qui s'étend jusque dans l'évidement et qui peut être fermée, après le montage du disque sur le rouleau, à l'aide de moyens de liaison (7, 8).

7. Rouleau suivant l'une des revendications 1 - 6, **caractérisé en ce que** les éléments de travail (9, 9") sont reliés au support d'éléments de travail (4) à l'aide de moyens de liaison (10) facilement séparables.

8. Rouleau suivant la revendication 7, **caractérisé en ce que** les moyens de liaison sont réalisés sous forme de fermetures à boucles et crochets (10).

9. Rouleau suivant l'une des revendications 1 - 8, **caractérisé en ce que** les supports d'éléments de travail (4) sont en matière plastique flexible.

10. Rouleau suivant l'une des revendications 1 - 8, **caractérisé en ce que** les supports d'éléments de travail (4, 4', 4") sont en une matière textile, telle que feutre, tissu ou analogue.

11. Rouleau suivant l'une des revendications 1 - 10, **caractérisé en ce que** les éléments de travail (9, 9') sont disposés sur les supports d'éléments de travail (4, 4', 4") d'une manière telle que, lorsque le rouleau tourne librement, ils sont disposés essentiellement chacun dans des plans radiaux respectifs.

12. Rouleau suivant la revendication 10, **caractérisé en ce que** le support d'éléments de travail (4', 4") est réalisé sous forme d'un disque en matière textile et les éléments de travail (9') sont formés par la zone radialement extérieure du disque, le disque comportant dans cette zone de multiples entailles radiales (11') qui s'étendent radialement vers l'intérieur à partir de sa périphérie.

13. Rouleau suivant l'une des revendications 1 - 11, **caractérisé en ce que** le support d'éléments de travail (14) comprend un anneau (15) qui est disposé rotatif sur le noyau de rouleau (1) et **en ce que** les éléments de travail (9) sont reliés chacun à l'anneau (15) au moyen d'une bande (16).

14. Rouleau suivant la revendication 13, **caractérisé en ce que** l'élément de travail (9) est relié d'une manière inséparable à la bande (16) au moyen d'une fermeture à boucles et crochets.

15. Rouleau suivant l'une des revendications 1 - 14, **caractérisé en ce que** des supports d'éléments d'appui (3) et des supports d'éléments de travail (4, 4' ; 14) sont disposés sur le noyau de rouleau (1) d'une manière alternée suivant la direction axiale de celui-ci.

16. Rouleau suivant la revendication 15, **caractérisé en ce que** la longueur axiale (a) des supports d'éléments d'appui (3) est inférieure à la largeur de travail (b) des éléments de travail (9) suivant la direction axiale du rouleau.

17. Rouleau suivant l'une des revendications 1 - 16, **caractérisé en ce que** les éléments d'appui (2) sont des poils de brosse.

18. Rouleau suivant l'une des revendications 1 - 11, **caractérisé en ce que** le support d'éléments de travail (4) est réalisé sous forme de disque et **en ce qu'**il comporte sur sa zone radialement extérieure, en vue du maintien de chaque élément de travail (9, 9", 9' "), une découpe (17) allongée s'étendant essentiellement suivant la direction circonférentielle, **en ce que** chaque élément de travail (9, 9", 9' ") est réalisé en forme de lame et a une largeur (b) qui est supérieure à la longueur (1) de la découpe (17) et **en ce que** l'élément de travail (9, 9', 9' ") est rétréci dans sa zone centrale, au moyen d'évidements (18), jusqu'à une largeur (b1) correspondant sensiblement à la longueur (1) de la découpe (17), d'une manière telle que l'élément de travail peut être tiré à moitié à travers la découpe, puis les deux moitiés peuvent être rabattues radialement vers l'extérieur.
